Europäisches Patentamt

European Patent Office

Office européen des brevets

(11) Veröffentlichungsnummer: **0 382 903**

**A2**

(12) # EUROPÄISCHE PATENTANMELDUNG

(21) Anmeldenummer: 89121423.1

(22) Anmeldetag: 20.11.89

(51) Int. Cl.5: **B64C 13/24, B63H 25/30**

(30) Priorität: 17.02.89 DE 3904869

(43) Veröffentlichungstag der Anmeldung:
22.08.90 Patentblatt 90/34

(84) Benannte Vertragsstaaten:
ES FR GB IT

(71) Anmelder: DORNIER LUFTFAHRT GMBH
Postfach 1303
D-7990 Friedrichshafen 1(DE)

(72) Erfinder: Oberdörffer, Elmar, Dipl.-Ing.
Eckbeck, 16
D-7799 Heiligenberg(DE)
Erfinder: Rank, Alfred, Dipl.-Ing.
Im Nieber 2
D-7997 Immenstaad(DE)

(74) Vertreter: Landsmann, Ralf, Dipl.-Ing.
DORNIER GMBH - Patentabteilung - Kleeweg
3
D-7990 Friedrichshafen 1(DE)

(54) **Einrichtung zur Verstellung von Rudern, insbesondere für Luft- oder Wasserfahrzeuge.**

(57) Einrichtung zur Verstellung von Rudern, insbesondere für Luft- oder Wasserfahrzeuge, wobei die Einrichtung Getriebeelemente in der Art von Kurbeltrieben enthält und eine über das Getriebe auf das Ruder einwirkende Stellvorrichtung, und wobei das Verstellgetriebe (4, 5; 7, 10) zu beiden Seiten der Ruderschwenkachse (6) am Ruder (1) fest angeordnete Getriebeglieder (4, 5) aufweist, und eines der Getriebeglieder (5) mittels eines Gelenks (8) an eine Koppel (10') des Getriebes und das andere der Getriebeglieder (4) mittels eines Gelenks (11) an eine Koppel (10) anschliesst, wobei die eine der Koppeln (10') einen Steller (7) enthält und die Koppeln (10; 10') jeweils mit ihrem freien Ende über ein Gelenk (9) zusammengeschlossen sind und wobei sich ferner das Gelenk (9) zwischen der einen Koppel (10') und der anderen Koppel (10) frei beweglich mittels einer Führung an der feststehenden Zelle (2) abstützt.

EP 0 382 903 A2

## Einrichtung zur Verstellung von Rudern, insbesondere für Luft- oder Wasserfahrzeuge

Die Erfindung bezieht sich auf eine Einrichtung der im Oberbegriff des Patentanspruchs 1 angegebenen Gattung.

Bei bekannten Ausbildungen von Fluggerätesteuerungen werden die Ruder mittels Steller, die beispielsweise mit einem Druckmedium arbeiten, über Druckmittelsteuereinrichtungen in bekannter Weise betätigt.

Dabei stützen sich die Steiler an der Fluggerätezelle ab und greifen über entsprechende Getriebeglieder an den Rudern an. Dabei müssen die Stellerkräfte vollständig von der Ruderlagerung aufgenommen werden und die Zellenstruktur wird zwischen Ruderlagerung und Anlenkpunkt des Stellers durch die Stellerkräfte belastet. Außerdem wird der Ruderausschlag durch elastische Verformung der Zellenstruktur beeinflußt.

Es ist auch bekannt zur Entlastung der Zellenstruktur eine zusätzliche Verbindung zwischen dem Anlenkpunkt des Stellers und dem Ruderlager vorzusehen. Damit wird auch der Einfluß der Zellenverformung auf den Ruderausschlag weitgehend beseitigt. Jedoch bleibt auch bei dieser bekannten Ausbildung die hohe Belastung des Ruderlagers bestehen.

Aufgabe der Erfindung ist es, eine Ruderverstelleinrichtung zu schaffen, mit deren Hilfe eine Entlastung des Ruderlagers von den Stellerkräften erreicht wird.

Die gestellte Aufgabe ist erfindungsgemäß gelöst durch die Ausbildung einer Ruderverstelleinrichtung nach den Merkmalen des kennzeichnenden Teils des Anspruchs 1.

Weitere vorteilhafte Ausgestaltungen des Haupterfindungsgedankens sind Gegenstände weiterer Ansprüche.

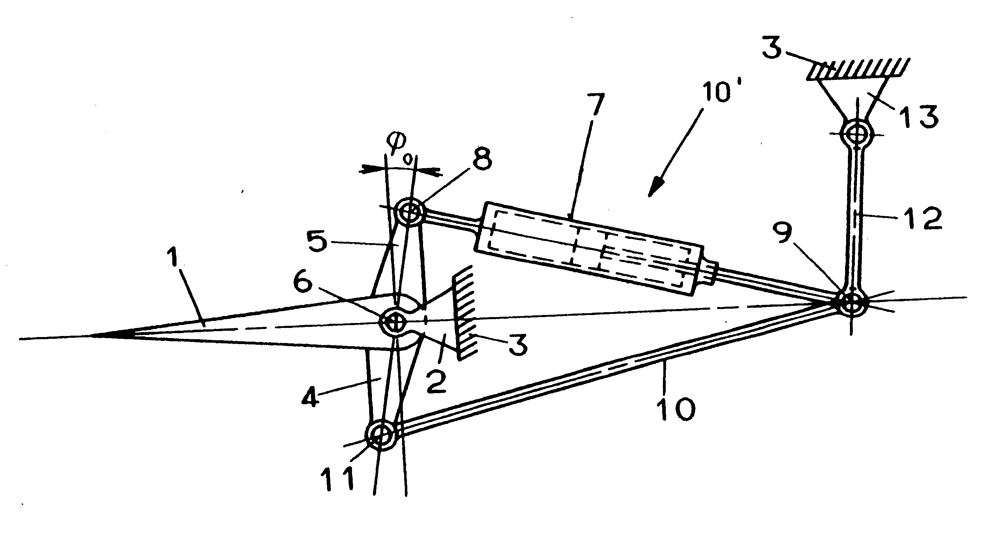

In der Zeichnung ist ein Ausführungsbeispiel gemäß der Erfindung dargestellt.

Die Ausführung ist nachfolgend anhand der Zeichnung näher erläutert.

Die Zeichnung zeigt in schematischer Darstellung eine Ruderverstelleinrichtung in Seitenansicht, wobei die Einrichtung zur Übertragung der Steuerbewegungen auf das Ruder Getriebeglieder in der Art von Kurbeltrieben enthält.

Bei dem gezeigten Ausführungsbeispiel sind am Ruder 1 zwei Hebel 4 bzw. 5 fest angebracht, die einander in bezug auf die Ruderschwenkachse 6 gegenüberliegen.

Mit dem Hebel 4 ist über ein Gelenk 11 eine Koppel 10 und mit dem Hebel 5 über ein Gelenk 8 eine Koppel 10′ der Ruderverstelleinrichtung gelenkig verbunden.

Sowohl die Koppel 10′ als auch die Koppel 10 sind über ein gemeinsames Schwenklager 9 gelenkig zusammengeschlossen. Das Lager 9 wird frei schwenkbar von einem Lenkerhebel 12 getragen. Der Lenkerhebel 12 ist schwenkbar mittels eines an der Fluggerätezelle 3 festen Lagers 13 aufgenommen. Die Koppel 10′ enthält einen Steller 7, der mittels einer Druckmittelsteuereinrichtung betätigt und im Sinne einer Verlängerung oder einer Verkürzung der Koppel 10′ verstellt wird. Die annähernd einander entgegengesetzt gerichtet wirkenden Kräfte der Koppel 10′ bzw. des Stellers 7 und an der Koppel 10 heben sich im Ruderlager 2 annähernd auf und führen zur Entlastung des Lagers. Das Ruderlager 2 wird mittels der erfindungsgemässen Ausbildung der Ruderverstelleinrichtung bei Ruderbetätigung nur noch durch die gleichgerichteten Komponenten der Kräfte der Koppel 10′ bzw. am Steller 7 und an der Koppel 10 belastet, deren Summe gleich der Kraft ist, die sich berechnet als Quotient aus Rudermoment und Abstand des Lenkers 12 vom Ruderlager 2 bzw. der Ruderschwenkachse 6.

Da dieser Abstand ein Vielfaches der Länge der Ruderhebel 4 bzw. 5 beträgt, ist die das Ruderlager 2 belastende Kraft nur ein entsprechender Bruchteil an der Koppel 10′ bzw. am Steller 7 wirkenden Kraft.

Bei einer hier beschriebenen, jedoch nicht dargestellten Ausführung, kann anstelle des Lenkerhebels 12 zur Führung des Gelenkes 9 auf einer vorbestimmten Bahn eine aus Führungsschienen und in diese eingreifenden Führungsgliedern bestehende Vorrichtung vorgesehen werden.

Je nach den Erfordernissen kann dabei die Führung als Geradführung oder aber auch mit in bestimmter Weise gekrümmt verlaufenden Führungsschienen ausgestattet sein. Derartige Führungen gehören für sich allein betrachtet zum allgemeinen Stand der Technik für eine grosse Anzahl von Anwendungen.

Bei symmetrischer Auslegung des Getriebes der Ruderverstelleinrichtung in Neutralstellung des Ruders 1, also bei einer eingestellten Länge der Koppel 10′ mittels des Stellers 7, gleich der Länge der Koppel 10 und bei Geradführung des Verbindungspunktes von der den Steller 7 enthaltenden Koppel 10′ und der Koppel 10, das heisst des Gelenkes 9, ergibt sich bei Ausschlag des Ruders 1 aus dieser Neutralstellung eine Unsymmetrie dadurch, dass die Koppel 10′ bzw. der Steller 7 seine Länge verändert, die Koppel 10 dagegen nicht.

Ein endlich langer Lenker 12 erzeugt bei der Führung des Verbindungspunktes von Koppel 10′ und Koppel 10 auf einem Kreisbogen eine Zusatzdrehung des Systems Koppel 10′-Koppel 10-Ruder 1, die ebenfalls unsymmetrisch ist.

Die Länge des Lenkers 12 lässt sich jedoch so wählen, dass die von ihm erzeugte unsymmetrische Zusatzbewegung die Unsymmetrie der Bewegung bei unendlich langem Lenker gerade aufhebt, die Gesamtbewegung also symmetrisch wird.

Um unpraktisch große Lenkerlängen zu vermeiden, insbesondere wenn wie in den meisten Fällen durch irgendwelche vorgegebenen Randbedingungen nur geringer Raum zur Verfügung steht, wird mittels einer Voreinstellung der Ruderhebel 4, 5 um einen Voreinstellwinkel $\phi_0$ gegenüber dem Ruder 1 in der Mittelstellung bzw. Neutralstellung eine zusätzliche Unsymmetrie in die Verstellbewegung des Ruders 1 bei unendlich langem Lenker eingeführt. Der Voreinstellwinkel $\phi_0$ wird so gewählt, dass die von der Länge des Lenkers 12 verursachte Zusatzbewegung und die ursprüngliche Bewegungssymmetrie ausgeglichen wird.

## Ansprüche

1. Einrichtung zur Verstellung von Rudern, insbesondere für Luft- oder Wasserfahrzeuge, enthaltend ein Ruderverstellgetriebe mit Getriebeelementen in der Art von Kurbelgetrieben und eine über das Verstellgetriebe auf das Ruder einwirkende Stellvorrichtung,
**dadurch gekennzeichnet**, dass
- das Verstellgetriebe (4, 5; 7, 8, 10) zu beiden Seiten der Ruderschwenkachse (6) am Ruder (1) fest angeordnete Getriebeglieder (4, 5) aufweist, dass
- das eine der Getriebeglieder (5) mittels eines Gelenks (8) an eine Koppel (10') und das andere der Getriebeglieder (4) mittels eines Gelenks (11) an eine Koppel (10) anschliesst, dass
- die eine der Koppeln (10') einen Steiler (7) enthält und die Koppeln (10' und 10) jeweils mit ihrem freien Ende über ein Gelenk (9) zusammengeschlossen sind und dass sich
- das Gelenk (9) zwischen der einen Koppel (10') und der anderen Koppel (10) beweglich mittels einer Führung an der feststehenden Zelle (2) abstützt.

2. Einrichtung nach Anspruch 1, dadurch gekennzeichnet, dass das Gelenk (9) zwischen Koppel (10) und Koppel (10') frei beweglich, jedoch nach vorgegebenen Werten mittels eines Lenkerhebels (12) mittels einer Anlenkung über ein Gelenk (13) an der festehenden Zelle (3) geführt ist.

3. Einrichtung nach Anspruch 1 und/oder 2, dadurch gekennzeichnet, dass das Gelenk (9) zwischen Koppel (10) und Koppel (10') frei beweglich geführt ist mittels sich an der festehenden Zelle (3) abstützender Führungsschienen und entsprechenden, mit den Schienen zusammenwirkenden Führungsgliedern.